# FASCICULE DE BREVET EUROPEEN

(11) **EP 3 069 057 B1**
(45) Date de publication et mention de la délivrance du brevet: **09.01.2019**
(21) Numéro de dépôt: 14809483.2
(22) Date de dépôt: 12.11.2014
(51) Int. Cl.: F16J 15/44, F01D 11/00, F01D 11/02, F16J 15/447

(54) **SYSTEME D'ETANCHEITE A DEUX RANGEES DE LECHETTES COMPLEMENTAIRES**
DICHTUNGSSYSTEM MIT ZWEI REIHEN AN KOMPLEMENTÄREN DICHTUNGSELEMENTEN
SEALING SYSTEM WITH TWO ROWS OF COMPLEMENTARY SEALING ELEMENTS

(30) Priorité: 14.11.2013 FR 1361122
(43) Date de publication de la demande: 21.09.2016
(73) Titulaire: Safran Aircraft Engines, 75015 Paris (FR)
(72) Inventeur: SCHOLTES, Christophe, F-77550 Moissy-Cramayel Cedex (FR)
(74) Mandataire: Brevalex
(86) Numéro de dépôt international: PCT/FR2014/052872
(87) Numéro de publication internationale: WO 2015/071585

(56) Documents cités:
- EP-A2- 2 412 933
- DE-A1- 19 960 895
- FR-A- 1 476 987
- GB-A- 2 408 548
- US-A1- 2014 086 727

## Description

### DOMAINE TECHNIQUE ET ART ANTÉRIEUR

La présente invention se rapporte au domaine des turbomachines, et plus particulièrement au domaine compresseur et des distributeurs de turbomachine.

L'invention s'applique à tout type de turbomachines terrestres ou aéronautiques, et notamment aux turbomachines d'aéronef telles que les turboréacteurs et les turbopropulseurs. Plus préférentiellement, elle s'applique à un turboréacteur double corps et double flux.

### ETAT DE LA TECHNIQUE ANTERIEURE

Une turbomachine comporte par exemple un compresseur ayant une pluralité d'étages de compression formés chacun d'une rangée annulaire d'aubes mobiles (rotor) montées sur une virole de la turbomachine et d'un redresseur (stator) monté sur un carter annulaire externe de la turbomachine.

Un redresseur de compresseur peut être formé d'un anneau, ou il peut être sectorisé (i.e. comporte une pluralité de secteurs angulaires reliés bout-à-bout circonférentiellement autour de l'axe longitudinal du compresseur). Tout au long de la présente demande, on entendra par le terme « secteur », toute portion annulaire d'une structure d'étendue annulaire d'angle égal ou inférieur à 360°, par exemple un secteur de stator ou plus spécifiquement un secteur de redresseur.

Chaque secteur de redresseur comprend une virole externe et une virole interne disposées coaxialement l'une à l'intérieur de l'autre, et une (ou plusieurs) pale(s) s'étendant radialement entre ces viroles et raccordée(s) à celles-ci par ses (leurs) extrémité(s) radiale(s).

Pour assurer le fonctionnement d'un compresseur, il existe un jeu, à chaque étage, entre le redresseur et le moyeu, formant une cavité sous redresseur. Dans un compresseur en fonctionnement, la pression augmente de l'amont vers l'aval. Par conséquent, un débit de fuite circule généralement dans cette cavité, de l'aval du redresseur vers l'amont, en passant sous l'extrémité radialement interne de la virole interne. L'existence d'un tel débit de fuite est souvent qualifiée de « phénomène de recirculation sous redresseur ».

Le phénomène de recirculation sous redresseur perturbe l'écoulement principal des gaz dans la turbomachine, et en particulier il modifie les conditions d'écoulement en amont des aubes. Ainsi, un tel phénomène constitue un facteur significatif de dégradation d'opérabilité et de pertes de performance pour tout compresseur.

Afin de lutter contre le phénomène de recirculation sous redresseur, une solution a déjà été proposée consistant en la mise en place de léchettes portées par la virole de rotor et disposées en vis-à-vis d'une couche de revêtement abradable portée par le redresseur. Cette association d'une rangée de léchettes et d'un revêtement abradable est nommée joint d'étanchéité à labyrinthe ou plus simplement « labyrinthe ».

De cette façon, il est possible de réduire la section de fuite et donc le débit de fuite des gaz sous la virole interne du redresseur.

D'autre part il est connu de DE 199 60 895 A1 un système d'étanchéité dans une cavité sous secteur de stator d'une veine de turbomachine, comportant deux couples d'étanchéité, comprenant chacun une léchette disposée en regard d'une surface d'un revêtement abradable.

Une difficulté est liée au fait que le rotor et le carter se déplacent indépendamment l'un de l'autre sous l'effet des déformations mécaniques et thermiques relativement importantes lors d'une mission classique d'un moteur. Par conséquent, la section de fuite varie au cours des missions du moteur. En certains points de la mission, la section de fuite atteint une valeur suffisamment importante pour avoir un impact non négligeable sur les performances du compresseur.

La perte de performance atteint par exemple 0,5% à 1% sur les points à haut-régime de la mission moteur.

Ainsi, il est souhaitable d'améliorer les solutions permettant d'éviter l'impact négatif des phénomènes de recirculation sous redresseur afin d'améliorer les performances du compresseur.

### EXPOSÉ DE L'INVENTION

L'invention porte ainsi sur un système d'étanchéité dans une cavité sous secteur de stator d'une veine de turbomachine, comprenant un secteur de stator et un organe de stator, la cavité étant comprise entre un pied d'aube du secteur de stator et un organe de rotor complémentaire, le pied comportant une première surface pourvue au moins partiellement d'un revêtement abradable, l'organe de rotor étant pourvu d'au moins une première léchette disposée en regard de la première surface, la première surface et la première léchette formant un premier couple d'étanchéité et délimitant entre elles une première section de fuite.

Selon l'invention, le pied comporte une deuxième surface pourvue au moins partiellement d'un revêtement abradable, l'organe de rotor étant pourvu d'au moins une deuxième léchette disposée en regard de la deuxième surface, la deuxième surface et la deuxième léchette formant un deuxième couple d'étanchéité et délimitant entre elles une deuxième section de fuite, le premier couple d'étanchéité évoluant vers une section de fuite respective minimum lorsque le deuxième couple évolue vers une section de fuite respective maximum, et, le premier couple d'étanchéité évoluant vers une section de fuite respective maximum lorsque le deuxième couple évolue vers une section de fuite respective minimum lors d'une mission moteur. Enfin, le premier et le second couple d'étanchéité sont espacés axialement l'un de l'autre selon l'axe longitudinal de la turbomachine, de sorte que le revêtement abradable du deuxième couple d'étanchéité se situe écarté axialement d'une plateforme du secteur de stator.

L'invention permet ainsi de compenser l'écartement relatif du premier couple d'étanchéité par une réduction du débit de fuite au travers du deuxième couple d'étanchéité. L'invention permet donc avantageusement d'utiliser les déformations que subissent le stator et le rotor d'une turbomachine lors de son fonctionnement. Plus précisément, avec l'écartement axial entre les couples d'étanchéité, l'effet de déversement que subissent le stator et le rotor l'un relativement à l'autre est judicieusement mis à profit pour obtenir la compensation désirée entre les débit de fuite.

Par ailleurs, l'invention peut avantageusement comporter une paroi axiale, par exemple sous la forme d'un secteur d'anneau. Cette paroi axiale a pour effet de provoquer une perte de charge dans l'écoulement de fuite qui s'effectue à l'avantage des performances globales de la turbomachine.

L'invention présente en outre l'avantage de ne pas poser de contrainte d'assemblage supplémentaire par rapport à l'existant.

Avantageusement, la première surface est une surface interne du pied et la deuxième surface est une surface externe du pied.

Dans une réalisation particulière, la première surface a un rayon de courbure inférieur à celui de la deuxième surface.

La première surface peut par exemple faire face à un axe longitudinal de la turbomachine, au contraire, c'est-à-dire à l'opposé, de la deuxième surface.

De préférence, la deuxième surface appartient à une paroi axiale faisant saillie axialement à partir d'un corps du pied, de sorte que la deuxième surface se situe en partie radialement sous une plateforme de l'organe de rotor, et la première surface est agencée sur le corps de pied en étant au moins en partie recouverte radialement par une plateforme du secteur de stator.

Dans un premier mode de réalisation de l'invention, la deuxième surface appartient à la paroi axiale du pied, la paroi axiale s'étendant vers l'amont. L'invention peut ainsi être implémentée dans une veine de compresseur basse ou haute pression. Cette configuration permet en effet d'utiliser avantageusement le déversement que subissent le stator et le rotor l'un relativement à l'autre lors du fonctionnement de la turbomachine lorsque l'invention est implémentée dans un compresseur.

Dans un premier mode de réalisation de l'invention, la deuxième surface appartient à la paroi axiale du pied, la paroi axiale s'étendant vers l'aval. L'invention peut ainsi être implémentée dans une veine de turbine basse ou haute pression. Cette configuration permet en effet d'utiliser avantageusement le déversement que subissent le stator et le rotor l'un relativement à l'autre lors du fonctionnement de la turbomachine lorsque l'invention est implémentée dans une turbine.

L'invention porte par ailleurs sur un organe de rotor comportant au moins une première léchette s'étendant vers l'extérieur de la turbomachine formant un premier groupe de léchettes, et au moins une deuxième léchette faisant face à l'axe longitudinal et formant un second groupe de léchettes, l'organe de rotor étant configuré pour former un système d'étanchéité tel que décrit précédemment en combinaison avec un secteur de stator, le premier et le second groupe de léchettes étant espacés axialement l'un de l'autre.

Il doit être compris ici qu'une léchette orientée vers l'extérieur est disposée de telle sorte que la distance radiale entre sa crête et l'axe longitudinal de la turbomachine est supérieure à la distance radiale entre son pied et ce même axe, à l'inverse d'une léchette faisant face à l'axe longitudinal.

L'invention porte encore sur un secteur de stator comportant une aube ayant un pied qui comporte une première surface pourvue au moins partiellement d'un revêtement abradable et qui fait face à un axe longitudinal de la turbomachine, et une deuxième surface pourvue au moins partiellement d'un revêtement abradable et faisant face à l'extérieur de la turbomachine, le secteur de stator étant configuré pour former un système d'étanchéité tel que décrit précédemment en combinaison avec un organe de rotor. De plus, les deux revêtement abradables sont espacés axialement l'un de l'autre.

L'invention porte encore sur une turbomachine dans laquelle un organe de rotor et un secteur de stator tels que décrits précédemment forment conjointement un système d'étanchéité.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 illustre très schématiquement un exemple de compresseur comportant un système d'étanchéité sous secteur de stator selon l'invention,
- les figures 2A et 2B illustrent deux situations dans le fonctionnement du compresseur montrant des exemples de déformations du secteur de stator.

De plus, les différentes parties représentées sur les figures ne le sont pas nécessairement à échelle réelle pour rendre les figures plus lisibles.

### EXPOSÉ DÉTAILLÉ DE MODES DE RÉALISATION PARTICULIERS

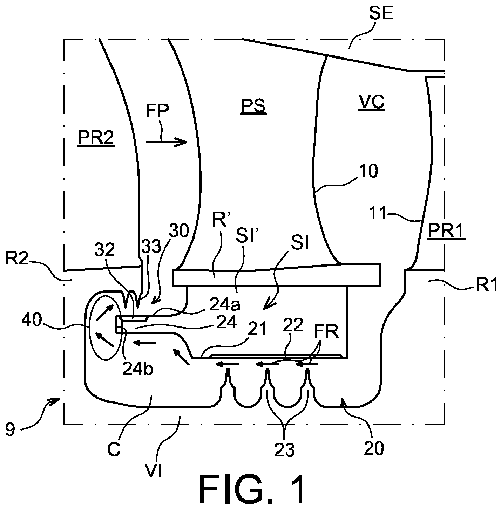

Dans la description, les termes amont et aval sont à considérer par rapport à une direction principale FP d'écoulement normal des gaz pour une turbomachine (voir figure 1). Par ailleurs, on appelle axe de la turbomachine, l'axe longitudinal de symétrie de la turbomachine. La direction axiale correspond à la direction de l'axe de la turbomachine, et une direction radiale est une direction perpendiculaire à cet axe. En outre, sauf précision contraire, les adjectifs et adverbes axial, radial, axialement et radialement sont utilisés en référence aux directions axiale et radiale précitées. De plus, sauf précision contraire, les adjectifs interne et externe sont utilisés en référence à une direction radiale de sorte que la partie ou la face interne (i.e. radialement interne) d'un élément est plus proche de l'axe de la turbomachine que la partie ou la face externe (i.e. radialement externe) du même élément. Dans les figures annexées, le côté externe est en haut et le côté interne en bas.

Il a été représenté sur la figure 1 un schéma partiel d'un exemple de compresseur de turbomachine illustrant un secteur de redresseur 10 et un élément de rotor 11 pourvus conjointement d'un système d'étanchéité 9 selon l'invention, c'est-à-dire un système de limitation du débit de fuite.

Le secteur de redresseur 10 comporte une virole externe SE, une pale PS et une virole interne SI formant le pied du stator. La pale PS est montée à l'intérieur de la virole SE. La virole interne SI est montée à l'extrémité interne de la pale PS, coaxialement à la virole SE.

L'élément de rotor 11 comporte une plateforme de rotor amont R2 portant une pale PR2 et une plateforme de rotor aval R1, portant une pale PR1. Les plateformes amont R2 et aval R1 sont reliées entre elles par une virole VI de rotor.

Comme il sera décrit en fin de description, ce système est transposable à peu de changements près à une turbine.

La virole interne SI est située axialement entre les plateformes R1 et R2, et radialement sous la plateforme R' du secteur de redresseur 10.

La virole interne SI comporte une surface interne 21. L'espace situé radialement entre la virole SI et la virole VI du rotor définit une cavité C sous stator.

La virole interne SI comporte dans l'exemple représenté une lame ou paroi axiale 24 qui s'étend axialement vers l'amont du compresseur, donc ici une lame antérieure. La lame 24 fait ainsi saillie axialement à partir d'un corps SI' du pied SI, jusqu'à s'étendre au-delà de la plateforme R' selon la direction axiale, et être recouverte partiellement par la plateforme R2.

La lame 24 se présente ici sous la forme d'un secteur d'anneau s'étendant angulairement par exemple selon la dimension angulaire du pied de stator correspondant (ici, le secteur de redresseur 10).

L'élément de rotor 11 et le secteur de redresseur 10 sont formés de telle manière que la lame 24 est entourée au moins partiellement par la plateforme R2 et la virole VI sur ses trois faces externe 24a, antérieure 24b et interne à l'amont de la cavité C.

La surface interne 21 est pourvue d'une couche de revêtement abradable 22. Trois léchettes 23 constituant un premier groupe de léchettes sont ici disposées sur la virole VI, en vis-à-vis du revêtement abradable 22. Le revêtement 22 et les léchettes 23 forment ainsi un premier couple d'étanchéité 20, encore appelé premier joint à labyrinthe. Le revêtement abradable 22 se situe radialement sous la plateforme R' du secteur 10, de préférence sans se projeter axialement au-delà de celle-ci. Il en est de même pour la première surface 21 agencée sur le corps de pied (SI') et portant le revêtement abradable 22.

La lame antérieure 24 est ici pourvue sur sa face externe 24a d'une couche de revêtement abradable 32. Deux léchettes 33 formant un second groupe de léchettes sont ici disposées sur la virole VI, en vis-à-vis du revêtement abradable 32. Le revêtement 32 et les léchettes 33 forment ainsi un deuxième couple d'étanchéité 30, encore appelé deuxième joint à labyrinthe. Le revêtement abradable 32 se situe écarté axialement de la plateforme R' du secteur 10, de sorte qu'il n'y ait pas de recouvrement dans la direction axiale. De plus, la deuxième surface 24a portant le revêtement abradable 32 se situe en partie radialement sous la plateforme R2 de l'organe de rotor 11.

Le premier couple d'étanchéité 20 et le second couple d'étanchéité 30 sont espacés axialement l'un de l'autre. En d'autres termes, selon la direction axiale, il n'y a pas de zone de recouvrement entre ces deux couples 20, 30, ni de zone de recouvrement axial entre les deux groupes de léchettes 23, 33, ni encore de zone de recouvrement axial entre les deux revêtements abradables 22, 32.

Dans le mode de réalisation représenté, le nombre de léchettes 23, 33 dans le premier et le second groupe de léchettes est non limitatif, et peut s'étendre par exemple d'un à dix pour un couple 20 ou 30 donné.

En figure 1, la flèche FP illustre la direction globale de l'écoulement dans l'exemple de la veine VC d'un compresseur de turbomachine. Dans un compresseur, la pression statique de l'air augmente à mesure que l'air est entraîné vers l'aval du compresseur. Ainsi, la pression de l'air dans la veine est plus importante à proximité de la pale aval PR1 qu'à proximité de la pale amont PR2. Un écoulement de fuite FR se forme alors dans la cavité C. La direction générale de cet écoulement FR est représentée en figure 1 dans l'exemple d'un compresseur.

Au cours d'une mission d'un moteur, l'élément de rotor 11 et le secteur de redresseur 10 subissent chacun des déformations thermiques et mécaniques propres.

Ainsi, ces deux ensembles 10 et 11 se déplacent relativement l'un par rapport à l'autre.

Un éloignement radial de la virole interne SI du secteur de redresseur 10 par rapport à la virole VI du rotor a pour conséquence :
- d'une part d'augmenter le jeu entre les léchettes 23 et le revêtement abradable 22 et donc la section de fuite à travers le premier couple d'étanchéité 20,
- d'autre part de réduire le jeu entre les léchettes 33 et le revêtement abradable 32 et donc la section de fuite à travers le deuxième couple 30.

Par conséquent, lorsque le jeu est maximum entre le revêtement abradable 22 et les léchettes 23, le jeu entre le revêtement abradable 32 et les léchettes 33 est au plus faible.

Inversement, lorsque les viroles SI et VI se rapprochent radialement l'une de l'autre, la section de fuite dans le premier couple d'étanchéité 20 diminuera tandis que la section de fuite augmentera dans le deuxième couple 30.

La section de fuite instantanée respective de chacun des couples 20 et 30 évolue par conséquent entre une section de fuite minimale et une section de fuite maximale respective.

La plus faible des sections de fuite au sein des couples 20 et 30 détermine donc le débit de fuite global de l'écoulement FR. Les deux couples 20 et 30 ont un effet complémentaire dans la limitation du débit de fuite.

De plus, comme il est visible en figure 1, au passage par la zone 40, c'est-à-dire au niveau de la surface antérieure 24b, l'écoulement de fuite FR subit un changement de direction. Ce changement de direction induit des turbulences et donc une perte de charge dans l'écoulement FR, c'est-à-dire une dissipation de son énergie mécanique. Cette perte de charge dans l'écoulement de fuite FR se produit au profit de l'écoulement principal FP et donc en faveur de la performance du compresseur.

Par ailleurs, comme il sera détaillé ci-dessous, le présent système d'étanchéité 9 permet d'utiliser à son avantage un phénomène de déversement du redresseur sous l'effet des efforts aérodynamiques et mécaniques dans la veine pour réduire le jeu minimal à haut-régime, et ce en particulier grâce à l'écartement axial entre les deux couples d'étanchéité 20, 30.

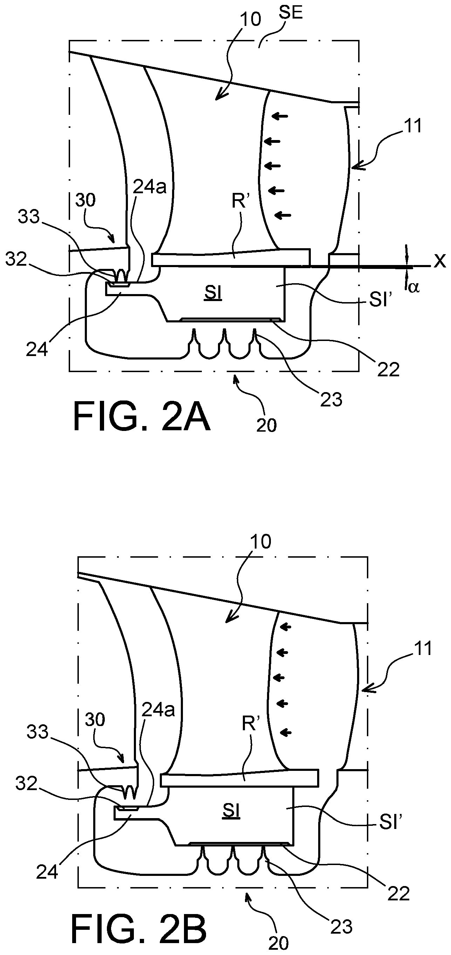

En effet, l'exemple de la figure 2A illustre la position relative des ensembles 10 et 11 au cours d'une phase d'augmentation du régime moteur. Ici, le secteur de redresseur 10 s'est dilaté radialement vers l'extérieur, à la fois sous l'effet d'un échauffement dû à la montée en pression du flux et sous l'incidence mécanique du flux d'air sous pression. En revanche, l'élément de rotor 11 qui possède une plus grand inertie thermique a subi un échauffement moindre et donc une déformation moindre.

En outre, le secteur de redresseur 10 subit des efforts aérodynamiques dans la veine VC de la droite vers la gauche dus à l'augmentation de la pression de l'amont vers l'aval dans le compresseur.

En conséquence, le secteur de redresseur 10 subit un déplacement angulaire α par rapport à une direction longitudinale X alignée avec l'axe de la turbomachine, ce déplacement étant couramment dénommé « déversement ». Ce déplacement angulaire α résulte en un mouvement de la lame 24 vers l'extérieur de la turbomachine, et donc en un rapprochement du revêtement abradable 32 et des léchettes 33. Dans cette configuration, le premier couple d'étanchéité 20 présente une section de fuite maximale alors que le deuxième couple d'étanchéité 30 présente un jeu minimum. Du fait de l'écartement axial entre les deux couples 20, 30, un faible débattement angulaire α suffit pour entraîner une diminution sensible du débit de fuite à travers le second couple 30.

L'exemple de la figure 2B illustre les mêmes ensembles 10 et 11 au cours d'une phase de diminution du régime moteur. Le secteur de redresseur 10 s'est alors refroidi et donc contracté alors que le rotor est toujours dans un état échauffé sous l'effet de l'inertie thermique. La virole SI de redresseur s'est alors rapprochée de la virole VI du rotor, et, le premier couple d'étanchéité 20 présente une section de fuite minimale alors que le deuxième couple d'étanchéité 30 présente un jeu maximal.

Le système d'étanchéité 9 dans un compresseur, décrit en référence aux figures 1 et 2A et 2B, peut être transposé aux turbines basse ou haute pression.

Dans une veine VT de turbine dont le stator est dénommé distributeur, contrairement aux compresseurs, la pression statique diminue de l'amont vers l'aval et l'écoulement de fuite dans la cavité sous un stator de turbine a une direction de l'amont vers l'aval, c'est-à-dire une direction inverse de l'écoulement de fuite sous un redresseur de compresseur.

Ainsi, dans un mode de réalisation non représenté d'un système d'étanchéité sous stator de turbine, le pied de distributeur SI est pourvu d'une lame de configuration analogue à la lame antérieure 24 mais orientée vers l'aval. Une telle configuration permet également de bénéficier des effets du déversement liés aux efforts aérodynamiques qui s'exercent alors de l'amont vers l'aval. L'élément de rotor de la turbine, le pied de distributeur et la lame sont par ailleurs pourvus du même type de couples d'étanchéité que les couples 20 et 30.

## Revendications

1. Système d'étanchéité dans une cavité (C) sous secteur de stator (10) d'une veine (VC, VT) de turbomachine, comprenant un secteur de stator (10) et un organe de rotor (11), la cavité (C) étant comprise entre un pied (SI) d'aube (PS) du secteur de stator (10) et l'organe de rotor (11) complémentaire,
le pied (SI) comportant une première surface (21) pourvue au moins partiellement d'un revêtement abradable (22),
l'organe de rotor (11) étant pourvu d'au moins une première léchette (23) disposée en regard de la première surface (21), la première surface (21) et la première léchette (23) formant un premier couple d'étanchéité (20) et délimitant entre elles une première section de fuite,
**caractérisé en ce que** :
le pied (SI) comporte une deuxième surface (24a) pourvue au moins partiellement d'un revêtement abradable (32),
l'organe de rotor (11) étant pourvu d'au moins une deuxième léchette (33) disposée en regard de la deuxième surface (24a), la deuxième surface (24a) et la deuxième léchette (33) formant un deuxième couple d'étanchéité (30) et délimitant entre elles une deuxième section de fuite,
le premier couple d'étanchéité (20) évoluant vers une section de fuite respective minimum lorsque le deuxième couple (30) évolue vers une section de fuite respective maximum, et, le premier couple d'étanchéité (20) évoluant vers une section de fuite respective maximum lorsque le deuxième couple (30) évolue vers une section de fuite respective minimum lors d'une mission moteur,
le premier et le second couple d'étanchéité étant espacés axialement l'un de l'autre selon l'axe longitudinal de la turbomachine, de sorte que le revêtement abradable (32) du deuxième couple d'étanchéité (30) se situe écarté axialement d'une plateforme (R') du secteur de stator (10).

2. Système d'étanchéité selon la revendication précédente, la première surface (21) étant une surface interne du pied (SI) et la deuxième surface (24a) étant une surface externe du pied (SI).

3. Système d'étanchéité selon l'une des revendications 1 ou 2, la première surface (21) ayant un rayon de courbure inférieur à celui de la deuxième surface (24a).

4. Système d'étanchéité selon l'une des revendications 1 à 3, la deuxième surface (24a) appartenant à une paroi axiale (24) faisant saillie axialement à partir d'un corps (SI') du pied (SI), de sorte que la deuxième surface (24a) se situe en partie radialement sous une plateforme (R2) de l'organe de rotor (11), et la première surface (21) étant agencée sur le corps de pied (SI') en étant au moins en partie recouverte radialement par une plateforme (R') du secteur (10).

5. Système d'étanchéité selon l'une des revendications 1 à 4, la paroi axiale (24) s'étendant vers l'amont et la veine de turbomachine étant une veine de compresseur (VC).

6. Système d'étanchéité selon l'une des revendications 1 à 4, la paroi axiale s'étendant vers l'aval et la veine étant une veine de turbine (VT).

7. Organe de rotor de turbomachine comportant au moins une première léchette (23) s'étendant vers l'extérieur de la turbomachine et formant un premier groupe de léchettes, et au moins une deuxième léchette (33) faisant face à un axe longitudinal de la turbomachine et formant un second groupe de léchettes, l'organe de rotor étant configuré pour former un système (9) selon l'une des revendications 1 à 6 en combinaison avec un secteur de stator (10), le premier et le second groupe de léchettes étant espacés axialement l'un de l'autre.

8. Secteur de stator de turbomachine comportant une aube (PS) ayant un pied (SI), le pied (SI) d'aube (PS) comportant une première surface (21) pourvue au moins partiellement d'un revêtement abradable (22) et faisant face à un axe longitudinal de la turbomachine, et une deuxième surface (24a) pourvue au moins partiellement d'un revêtement abradable (32) et faisant face à l'extérieur de la turbomachine, le secteur de stator étant configuré pour former un système d'étanchéité selon l'une des revendications 1 à 6 en combinaison avec un organe de rotor (11), le revêtement abradable (22) et le revêtement abradable (32) étant espacés axialement l'un de l'autre .

9. Turbomachine comportant un organe de rotor (11) selon la revendication 7 et un secteur de stator (10) selon la revendication 8, l'organe de rotor (11) et le secteur de stator (10) formant conjointement un système d'étanchéité (9).

## Patentansprüche

1. Dichtungssystem in einem Hohlraum (C) unter einem Statorbereich (10) einer Strömungsbahn (VC, VT) von Turbotriebwerken, bestehend aus einem Statorbereich (10) und einem Rotorteil (11), wobei der Hohlraum (C) zwischen einem Fuß (S1) einer Schaufel (PS) des Statorbereichs (10) und dem komplementären Rotorteil (11) befindlich ist,
wobei der Fuß (S1) eine erste Oberfläche (21) aufweist, die zumindest teilweise mit einer Verschleiß-Beschichtung (22) versehen ist,
wobei das Rotorteil (11) mit mindestens einer ersten Dichtungslippe (23) versehen ist, die gegenüber der ersten Oberfläche (21) angeordnet ist, wobei die erste Oberfläche (21) und die erste Dichtungslippe (23) ein erstes Dichtungspaar (20) bilden und zwischen sich einen ersten Leck-Bereich umgrenzen,
**dadurch gekennzeichnet,**
**dass** der Fuß (S1) eine zweite Oberfläche (24a) aufweist, die zumindest teilweise mit einer Verschleiß-Beschichtung (32) versehen ist,
wobei das Rotorteil (11) mit mindestens einer zweiten Dichtungslippe (33) versehen ist, die gegenüber der zweiten Oberfläche (24a) angeordnet ist, wobei die zweite Oberfläche (24a) und die zweite Dichtungslippe (33) ein zweites Dichtungspaar (30) bilden und zwischen sich einen zweiten Leck-Bereich umgrenzen,
wobei sich bei einem Triebwerkeinsatz das erste Dichtungspaar (20) zu einem jeweiligen minimalen Leck-Bereich entwickelt, sobald sich das zweite Dichtungspaar (30) zu einem jeweiligen maximalen Leck-Bereich entwickelt, und das erste Dichtungspaar (20) zu einem jeweiligen maximalen Leck-Bereich entwickelt, sobald sich das zweite Dichtungspaar (30) zu einem jeweiligen minimalen Leck-Bereich entwickelt,
wobei das erste und das zweite Dichtungspaar in axialer Richtung gemäß der Längsachse des Turbotriebwerks voneinander beabstandet sind, so dass sich die Verschleiß-Beschichtung (32) des zweiten Dichtungspaars (30) in axialem Abstand zu einer Plattform (R') des Statorbereichs (10) befindet.

2. Dichtungssystem nach dem vorherigen Anspruch, wobei die erste Oberfläche (21) eine Innenfläche des Fußes (S1) ist, und die zweite Oberfläche (24a) eine Außenfläche des Fußes (S1) ist.

3. Dichtungssystem nach einem der Ansprüche 1 oder 2, wobei die erste Oberfläche (21) einen Krümmungsradius hat, der kleiner ist als der der zweiten Oberfläche (24a).

4. Dichtungssystem nach einem der Ansprüche 1 bis 3, wobei die zweite Oberfläche (24a) zu einer axialen Wand (24) gehört, die in axialer Richtung von einem Körper (S1') des Fußes (S1) hervorsteht, so dass sich die zweite Oberfläche (24a) in radialer Richtung teilweise unter einer Plattform (R2) des Rotorteils (11) befindet, und die erste Oberfläche (21) an dem Fußkörper (S1') angeordnet ist, indem sie zumindest teilweise radial durch eine Plattform (R') des Statorbereichs (10) bedeckt wird.

5. Dichtungssystem nach einem der Ansprüche 1 bis 4, wobei sich die axiale Wand (24) in Strömungsrichtung aufwärts erstreckt und die Strömungsbahn des Turbotriebwerks eine Verdichter-Strömungsbahn (VC) ist.

6. Dichtungssystem nach einem der Ansprüche 1 bis 4, wobei sich die axiale Wand (24) in Strömungsrichtung abwärts erstreckt und die Strömungsbahn eine Turbinen-Strömungsbahn (VT) ist.

7. Turbotriebwerks-Rotorteil, das mindestens eine erste Dichtungslippe (23) aufweist, die sich zur Außenseite des Turbotriebwerks hin erstreckt und eine erste Lippen-Gruppe bildet, sowie mindestens eine zweite Dichtungslippe (33) aufweist, die einer Längsachse des Turbotriebwerks gegenüberliegt und eine zweite Lippen-Gruppe bildet, wobei das Rotorteil so konfiguriert ist, dass es in Kombination mit einem Statorbereich (10) ein System (9) nach einem der Ansprüche 1 bis 6 bildet, wobei die erste und die zweite Lippen-Gruppe in axialer Richtung voneinander beabstandet sind.

8. Turbotriebwerks-Statorbereich, der eine Schaufel (PS) mit einem Fuß (S1) enthält, wobei der Fuß (S1) der Schaufel (PS) eine erste Oberfläche (21) aufweist, die zumindest teilweise mit einer Verschleiß-Beschichtung (22) versehen ist und einer Längsachse des Turbotriebwerks gegenüberliegt, und eine zweite Oberfläche (24a) aufweist, die zumindest teilweise mit einer Verschleiß-Beschichtung (32) versehen ist und der Außenseite des Turbotriebwerks gegenüberliegt, wobei der Statorbereich so konfiguriert ist, dass er in Kombination mit einem Rotorteil (11) ein Dichtungssystem nach einem der Ansprüche 1 bis 6 bildet, wobei die Verschleiß-Beschichtung (22) und die Verschleiß-Beschichtung (32) in axialer Richtung voneinander beabstandet sind.

9. Turbotriebwerk mit einem Rotorteil (11) nach Anspruch 7 und einem Statorbereich (10) nach Anspruch 8, bei dem das Rotorteil (11) und der Statorbereich (10) zusammen ein Dichtungssystem (9) bilden.

## Claims

1. Sealing system in a cavity (C) under a stator sector (10) of a turbomachine flow path (VC, VT), comprising a stator sector (10) and un rotor device (11), the cavity (C) being located between the root (SI) of a vane (PS) of the stator sector (10) and the complementary rotor device (11),
the root (SI) comprising a first surface (21) provided at least partially with an abradable coating (22),
the rotor device (11) being provided with at least one first sealing element (23) arranged facing the first surface (21), the first surface (21) and the first sealing element (23) forming a first sealing pair (20) and delimiting a first leakage section between them,
**characterised in that**:
the root (SI) comprises a second surface (24a) provided at least partially with an abradable coating (32),
the rotor device (11) being provided with at least one second sealing element (33) arranged facing the second surface (24a), the second surface (24a) and the second sealing element (33) forming a second sealing pair (30) and delimiting a first leakage section between them,
the first sealing pair (20) tending towards a minimum leakage section when the second pair (30) tends towards a corresponding maximum leakage section, and the first leakage pair (20) tending towards a maximum leakage section when the second pair (30) tends towards a minimum leakage section during an engine mission,
the first and second sealing pairs being at an axial spacing from each other along the longitudinal axis of the turbomachine, such that the abradable coating (22) of the second sealing pair (30) is arranged axially spaced from a platform (R') of stator sector (10).

2. Sealing system according to the previous claim, the first surface (21) being an internal surface of the root (SI) and the second surface (24a) being an external surface of the root (SI).

3. Sealing system according to either claim 1 or 2, the first surface (21) having a radius of curvature less than the radius of curvature of the second surface (24a).

4. Sealing system according to one of claims 1 to 3, the second surface (24a) belonging to an axial wall (24) projecting axially from a body (SI') of the root (SI), such that the second surface (24a) is radially located under a platform (R2) of the rotor device (11), and the first surface (21) being located on the body of the root (SI') while being at least partially overlapped radially by the platform (R') of the sector (10).

5. Sealing system according to one of claims 1 to 4, the axial wall (24) extending towards the upstream direction and the turbomachine flow path being a compressor flow path (VC).

6. Sealing system according to one of claims 1 to 4, the axial wall extending towards the downstream direction and the flow path being a turbine flow path (VT).

7. Turbomachine rotor device comprising at least one first sealing element (23) extending towards the outside of the turbomachine and forming a first group of sealing elements, and at least one second sealing element (33) facing the longitudinal axis of the turbomachine and forming a second group of sealing elements, the rotor device being configured to form a system (9) according to one of claims 1 to 6 in combination with a stator sector (10), the first and the second group of sealing elements being at an axial spacing from each other.

8. Turbomachine stator sector comprising a vane (PS) having a root (SI), the root (SI) of the vane (PS) comprising a first surface (21) provided at least partially with an abradable coating (22) and facing a longitudinal axis of the turbomachine, and a second surface (24a) provided at least partially with an abradable coating (32) and facing the outside of the turbomachine, the stator sector being configured to form a sealing system according to one of claims 1 to 6 in combination with a rotor device (11), the abradable coating (22) and the abradable coating (32) being at an axial spacing from each other.

9. Turbomachine comprising a rotor device (11) according to claim 7 and a stator sector (10) according to claim 8, the rotor device (11) and the stator sector (10) jointly forming a sealing system (9).
